Europäisches Patentamt

European Patent Office

Office européen des brevets

(11) Veröffentlichungsnummer: **0 481 510 A2**

# (12) EUROPÄISCHE PATENTANMELDUNG

(21) Anmeldenummer: **91117821.8**

(22) Anmeldetag: **18.10.91**

(51) Int. Cl.5: **G02F 1/37**

(30) Priorität: **19.10.90 DE 4033169**

(43) Veröffentlichungstag der Anmeldung:
**22.04.92 Patentblatt 92/17**

(84) Benannte Vertragsstaaten:
**AT BE CH DE ES FR GB IT LI NL SE**

(71) Anmelder: **Standard Elektrik Lorenz Aktiengesellschaft**
**Lorenzstrasse 10**
**W-7000 Stuttgart 40(DE)**
(84) **DE**

(71) Anmelder: **ALCATEL N.V.**
**Strawinskylaan 341 (World Trade Center)**
**NL-1077 XX Amsterdam(NL)**
(84) **BE CH ES FR GB IT LI NL SE AT**

(72) Erfinder: **Kersten, Peter, Dr.**
**Neuköllner Strasse 8**
**W-7250 Leonberg(DE)**
Erfinder: **Wischmann, Wiltraud, Dr.**
**Keltenweg 2**
**W-7016 Gerlingen(DE)**

(74) Vertreter: **Pohl, Herbert, Dipl.-Ing et al**
**Standard Elektrik Lorenz AG Patent- und**
**Lizenzwesen Postfach 30 09 29**
**W-7000 Stuttgart 30(DE)**

(54) **Lichtwellenleiter und Verfahren zur Herstellung eines Lichtwellenleiters.**

(57) Zur Erzeugung von Summen- und Differenzfrequenzen aus einem zu übertragenden Lichtsignal mittels eines verstärkenden Lichtsignals aus einer Pumplichtquelle oder zur Verdopplung der Frequenz eines Lichtsignals sind Lichtwellenleiter bekannt, die eine Wellenleiterschicht (4) aus einer optisch nichtlinearen Substanz aufweisen, wobei die Substanz senkrecht zur Lichtausbreitungsrichtung polarisierte Querstreifen (41, 42) enthält, die senkrecht zur Lichtausbreitungsrichtung verlaufen.

Erfindungsgemäß ist die Wellenleiterschicht (4) auf einem Substrat (1) oberhalb einer metallischen Schicht (2) integriert, die bei der Herstellung als Elektrode dient. Der Wellenleiterschicht (4) ist von der metallischen Schicht (2) durch eine Deckschicht (3) getrennt.

FIG.1

EP 0 481 510 A2

Die vorliegende Erfindung bezieht sich auf einen Lichtwellenleiter nach dem Oberbegriff des Patentanspruchs 1 und auf ein Verfahren zum Herstellen eines derartigen Lichtwellenleiters.

Aus dem Konferenzbericht PD-11 der "IPR Integrated Photonics Research Conference", Hilton Head, N.J., USA, 26. - 28 März 1990, über "Quasiphasematched Frequency Doubling over Several Millimeters in Poled Polymer Waveguides" sind derartige Lichtwellenleiter bekannt.

Ihre Wellenleiterschicht enthält eine Substanz mit Suszeptibilitäten höherer als 1. Ordnung, insbesondere 2. Ordnung, d.h. eine optisch nicht-lineare Substanz, so daß aus einem einfallenden Lichtsignal u.a. ein Lichtsignal der doppelten Frequenz erzeugt wird.

Andererseits läßt sich ein erstes Lichtsignal mit einem weiteren Lichtsignal einer anderen Frequenz, etwa dem Lichtsignal aus einer Pumplichtquelle, mischen, d.h. die Summen- und die Differenzfrequenz bilden. Aus den Lichtsignalen mit der Summen- oder der Differenzfrequenz läßt sich das ursprüngliche Lichtsignal verstärkt wiedergewinnen. Da Lichtsignale verschiedener Frequenz aufgrund der Dispersion der Substanz sich unterschiedlich schnell ausbreiten, gibt es eine Länge, die Kohärenzlänge, bei der sie phasengleich sind.

Die optisch nicht-lineare Substanz muß daher in Lichtausbreitungsrichtung mit der Periodizität der doppelten Kohärenzlänge polarisiert sein.

Gemäß der oben genannten Veröffentlichung ist die Substanz ein Polymer und Teil eines Polymergemischs, das die Wellenleiterschicht bildet; diese wird oben und unten jeweils von einer Deckschicht bedeckt, so daß der Lichtwellenleiter insgesamt eine flache Scheibe bildet.

Es ist Aufgabe der Erfindung, einen Lichtwellenleiter der eingangs genannten Art zu schaffen, der ein vielseitig einsetzbares optisches Bauelement darstellt.

Es ist ebenfalls die Aufgabe der Erfindung, ein Verfahren zu schaffen, nach dem sich derartige Lichtwellenleiter herstellen lassen.

Die Aufgabe wird bei einem Lichtwellenleiter der eingangs genannten Art erfindungsgemäß, wie in Patentanspruch 1 angegeben, gelöst.

Bei einem Verfahren zur Herstellung von Lichtwellenleitern der eingangs genannten Art wird die Aufgabe erfindungsgemäß gelöst, wie in Patentansprüchen 5 bis 10 angegeben.

Es ist ein Vorteil der Erfindung, daß sie eine besonders einfache Herstellung von Lichtwellenleitern gestattet.

Vorteilhaft gemäß Anspruch 2 ist es, den Lichtwellenleiter als Streifenwellenleiter auszubilden. Derartige Streifenwellenleiter sind sowohl als einfache Übertragungselemente als auch als Kopplungs- oder als Verzweigungsbauelemente einsetzbar. Gemäß den Ansprüchen 3 und 4 werden Lichtwellenleiter geschaffen, die eine höhere Ausbeute an durch die optisch nicht-lineare Substanz erzeugten Lichtsignalen bieten als bekannte Lichtwellenleiter.

Besonders vorteilhaft gemäß Patentanspruch 11 ist es, wenn das für die Herstellung der Wellenleiterschicht verwendete Polymergemisch bleichbar ist, d.h. bei Bestrahlung durch Licht, insbesondere UV-Licht oder durch schnelle Elektronen, beispielsweise mit einer Energie von 100 keV, vernetzt wird.

Bei diesem Polymergemisch läßt sich die Wellenleiterschicht ohne einen Ätzprozeß und anschließendes Wiederauffüllen der weggeätzten Querstreifen erzeugen und ohne daß das zuviel aufgetragene Polymergemisch wieder entfernt werden muß, wobei eine rauhe Oberfläche entstehen kann, was wiederum zu Streuverlusten führt.

Anhand der Zeichnungen werden Ausführungsbeispiele der Erfindung näher erläutert. Es zeigen:

Fig. 1      einen Lichtwellenleiter auf einem Substrat und

Fig. 2      einen Lichtwellenleiter, der als Streifenwellenleiter ausgebildet ist.

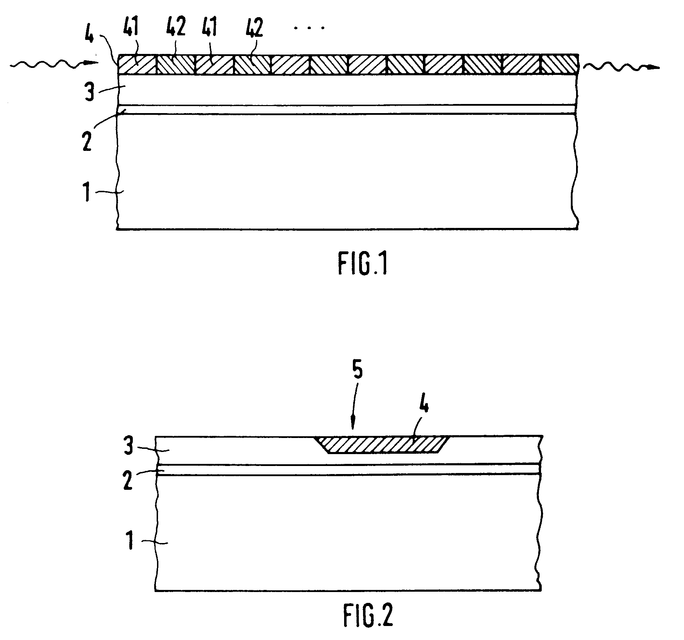

In einem ersten Ausführungsbeispiel (Fig. 1) eines Lichtwellenleiters ist ein Substrat 1 vorhanden, das von einer metallischen Schicht 2 bedeckt wird. Darüber liegen eine Deckschicht 3 und eine Wellenleiterschicht 4, die eine optisch nicht-lineare Substanz enthält; sie weist sich senkrecht zur Lichtausbreitungsrichtung erstreckende Querstreifen 41, 42 auf, deren Querschnitte in Fig. 2 sichtbar sind.

Die Querstreifen 41, 42 sind senkrecht zur Lichtausbreitungsrichtung periodisch polarisiert, d.h. entweder sind sie richtungsmäßig zueinander entgegengesetzt polarisiert, oder es sind entweder nur die Querstreifen 41 oder 42 polarisiert. Bevorzugt sind die Querstreifen 41, 42 gleich stark entgegengesetzt zueinander polarisiert. Je nach der Differenz zwischen den Brechungsindices für Lichtsignale der einfachen und der doppelten Frequenz bemißt sich die Kohärenzlänge, die der doppelten Breite eines polarisierten Querstreifens 41, 42 entsprechen muß, wenn die Querstreifen 41, 42 beide polarisiert sind.

Die Polarisationsrichtung verläuft vorzugsweise nicht nur senkrecht zur Lichtausbreitungsrichtung, sondern auch senkrecht zur Oberfläche der Wellenleiterschicht 4. Die metallische Schicht 2 erstreckt sich nicht notwendigerweise unterhalb der ganzen Wellenleiterschicht 4; sie kann auch nur einen in Lichtausbreitungsrichtung verlaufenden Streifen bilden. Dies führt dazu, daß herstellungsgemäß die Länge der polarisierten Querstreifen 41, 42 nur der Breite der metallischen Schicht 2 entspricht.

Die Deckschicht 3 dient als Pufferschicht, indem sie die Störung elektrischer Felder in der Wellenleiterschicht 4 durch die metallische Schicht 2 verhindert. Oberhalb der Wellenleiterschicht 4 können weitere Schichten, insbesondere eine weitere Deckschicht, vorhanden sein.

Der Lichtwellenleiter läßt sich auch als Streifenwellenleiter (Fig. 2) ausbilden. Die Wellenleiterschicht 4 ist als Streifen 5 in die Deckschicht 3 eingebettet und hat beispielsweise einen trapezförmigen Querschnitt.

Erfindungsgemäße Lichtwellenleiter werden hergestellt, indem auf dem Substrat 1 nacheinander die metallische Schicht 2, die Deckschicht 3 und eine Schicht aus einem Wellenleitermaterial aufgebracht werden, z.B. durch Abscheidung aus der Gasphase, Sputtern etc..

Das Wellenleitermaterial ist ein Polymergemisch, das wenigstens eine Komponente mit optisch nicht-linearen Eigenschaften enthält, z.B. gelöst in Dimethyl-Azo-Nitro-Stilben (DANS), Polymethylmethacrylat (PMMA). Nach dem Herstellen dieser Schichten wird zwischen der metallischen Schicht 2 einerseits und einer flächenhaften Elektrode andererseits, die auf die Wellenleiterschicht 4 aufgebracht und später wieder entfernt wird, eine Hochspannung angelegt, duch die die Wellenleiterschicht 4 als ganze polarisiert wird.

Darauf wird auf die Wellenleiterschicht 4 eine streifenförmige Maske aufgebracht, und durch Wegätzen werden Querstreifen entfernt; anschließend wird dort ein zweites Mal Wellenleitermaterial solange aufgetragen, bis diese Bereiche mindestens bis zur Oberfläche der verbliebenen, polarisierten Querstreifen 41 wieder aufgefüllt sind, so daß jetzt zwischen den Querstreifen 41 anstelle der polarisierten Querstreifen 42 Querstreifen entstanden sind, die optisch isotrop sind. Diese können breiter oder schmaler sein als die Querstreifen 41. Es ist jedoch notwendig, daß die Breite der Querstreifen 41 und der optisch isotropen Querstreifen zusammen jeweils der doppelten Kohärenzlänge des Lichts entspricht.

Wenn als Polymer ein Polymer verwandt wird, dessen Erweichungstemperatur (= Glas-Übergangstemperatur) sich während des Polarisierens oder nach dem Polarisieren erhöht, lassen sich die Querstreifen 42 entgegengesetzt zu den Querstreifen 41 polarisieren.

Ein derartiges Polymer ist z.B. aus J. Appl. Phys. 66 (1989), S.3241-3247, bekannt; es enthält optisch nicht-linear wirkende Donor-$\pi$-System-Akzeptor-Moleküle in einem starren Polymer-Netzwerk. Daher lassen sich die Querstreifen 42 polarisieren, wobei mit zunehmendem Grad der Polarisierung die Erweichungstemperatur steigt, ohne daß sich die Querstreifen 41 auflösen oder daß ihre Polarisierung beeinflußt wird.

Falls zwischen den Querstreifen 41 zuviel Wellenleitermaterial aufgebracht wurde, kann dieses entweder vor oder nach der Polarisierung der Querstreifen 42 z.B. durch Ätzen wieder entfernt werden.

Eine andere Möglichkeit zur Herstellung eines Lichtwellenleiters besteht darin, ein Polymer zu wählen, das durch Polarisierung optisch nicht-linear wird, jedoch bei Belichtung diese Eigenschaft verliert und wieder optisch isotrop wird. Ein derartiges Polymer ist z.B. aus J. Appl. Phys. 64 (1988), S. 2749 - 2751, bekannt.

Die Querstreifen 41 werden erzeugt, indem zunächst das auf die Deckschicht 3 aufgebrachte Wellenleitermaterial als ganzes durch Anlegen eines elektrischen Feldes polarisiert wird. Die hierzu neben der durch die metallische Fläche 2 gebildeten ersten Elektrode notwendige zweite Elektrode wird beispielsweise von einer weiteren metallischen Fläche gebildet, die die Schicht mit dem Wellenleitermaterial als ganze bedeckt und nach dem Polarisieren wieder entfernt wird. Diese Schicht wird mit Ausnahme der Querstreifen 41 belichtet. Durch die Belichtung wird das Wellenleitermaterial wieder isotrop: Zwischen den polarisierten Querstreifen 41 sind optisch-isotrope Querstreifen entstanden.

Wenn die zweite Elektrode nur auf die Schicht aus dem Wellenleitermaterial aufgelegt und nach dem Polarisieren wieder entfernt wird, müssen die Querstreifen 41 mit einer Deckschicht bedeckt werden, die für Licht derjenigen Wellenlängen undurchlässig ist, bei denen die Querstreifen 41 wieder optisch isotrop würden.

In einem weiteren Ausführungsbeispiel wird die Wellenleiterschicht aus einem bleichbaren Wellenleitermaterial erzeugt, welches durch Bestrahlung mit Licht, insbesondere UV-Licht, oder mit schnellen Elektronen, die beispielsweise eine Energie von 100 keV haben, vernetzt und damit dauerhaft stabilisiert ist.

Bleichbares Wellenleitermaterial weist Polymere auf, die auf der Basis von Negativ-Resisten hergestellt werden. Negativ-Resiste sind in der Photolithographie eingesetzte Lacke, die sich bei Belichtung vernetzen; hierzu zählen beispielsweise Diazid-Polydien-Systeme, Zimtsäure-Derivate oder Chalkone.

Für die Bestrahlung mit Elektronen sind Polymere mit Polyglycidmethacrylaten, Polymethylstyrol oder epoxidierten Polybutadienen geeignet. Diesen Polymeren werden zur Herstellung des Wellenleitermaterials die oben genannten Komponenten mit optisch nicht-linearen Eigenschaften zugesetzt.

Die Wellenleiterschicht 4 entsteht, indem zunächst das Wellenleitermaterial auf die Deckschicht 3 aufgeschleudert wird. Zwischen einer flächenhaften, von oben auf das Wellenmaterial aufgelegten Elektrode, die aufgebaut ist wie die als Gegenelektrode dienende metallische Schicht 2, und letzterer wird ein elektrisches Feld mit einer Spannungsdifferenz von 4 kV angelegt. Gleichzeitig weist das Wellenleitermaterial eine Temperatur zwischen 120 und 150°C auf und wird durch das elektrische Feld gepolt. Dieser Prozeß heißt Corona-Prozeß.

Anschließend wird anstelle der Elektrode eine streifenförmige Maske auf das Wellenleitermaterial gelegt, deren Streifenbreite der Breite der zu erzeugenden Querstreifen 41 entspricht. Während der Bestrahlung mit Licht oder mit Elektronen wird die Polarisation des Wellenleitermaterials in den Querstreifen 41, die bestrahlt werden, dauerhaft gemacht. Typische Streifenbreiten sind 6-10 $\mu$m. Bei der Bestrahlung mit Elektronen haben diese eine Energie zwischen 10 und 1000 keV; die Dosis liegt bei $10^{-4}$ bis $10^{-2}$ C/m$^2$.

Anschließend wird die Maske entfernt und wieder die Elektrode auf das Wellenleitermaterial aufgelegt. Dieses Mal wird ein entgegengesetzt gerichtetes, jedoch gleich starkes elektrisches Feld angelegt, während die Temperatur wiederum zwischen 120 und 150°C liegt, wodurch die noch nicht belichteten Querstreifen 42 ihre Polarisationsrichtung in die entgegengesetzte ändern.

Schließlich wird das ganze Wellenleitermaterial bestrahlt, wodurch die Polarisationsrichtung der Querstreifen 42 festgehalten wird. Damist ist die Wellenleiterschicht 4 entstanden.

Unabhängig vom Wellenleitermaterial, das für die Herstellung der Wellenleiterschicht gewählt wurde, läßt sich der Lichtwellenleiter als Streifenwellenleiter ausbilden. Dabei wird die Wellenleiterschicht 4 (Fig. 2) in die Deckschicht 3 eingebettet. Dazu wird vorher die Deckschicht 3 von der Oberfläche her in einem in Lichtausbreitungsrichtung verlaufenden Streifen 5 z.B. durch Ätzen abgetragen. Dieser wird darauf mit Wellenleitermaterial aufgefüllt, welches anschließend polarisiert und weiterbehandelt wird wie oben beschrieben.

Ein erfindungsgemäßer Wellenleiter kann Teil einer monolithisch integrierten optoelektronischen Anordnung sein.

## Patentansprüche

1. Lichtwellenleiter, der eine eine optisch nichtlineare Substanz enthaltende Wellenleiterschicht (4) aufweist, wobei die Wellenleiterschicht (4) Querstreifen (41, 42) enthält, die senkrecht zur Lichtausbreitungsrichtung polarisiert sind und die senkrecht zur Lichtausbreitungsrichtung verlaufen, und wobei unterhalb der Wellenleiterschicht (4) eine Deckschicht (3) vorhanden ist,
   **dadurch gekennzeichnet,**
   daß die Deckschicht (3) zumindest teilweise zwischen einer als Elektrode dienenden metallischen Schicht (2) und der Wellenleiterschicht (4) angeordnet ist.

2. Lichtwellenleiter nach Anspruch 1, dadurch gekennzeichnet, daß die Wellenleiterschicht (4) in die Deckschicht (3) eingebettet und ein in Lichtausbreitung verlaufender Streifen (5) ist.

3. Lichtwellenleiter nach Anspruch 1 oder Anspruch 2, dadurch gekennzeichnet, daß zwischen den polarisierten Querstreifen (41) der Wellenleiterschicht (4) optisch isotrope Querstreifen vorhanden sind.

4. Lichtwellenleiter nach Anspruch 1 oder Anspruch 2, dadurch gekennzeichnet, daß die Wellenleiterschicht (4) aus einem Polymer besteht, dessen Erweichungstemperatur während des Polarisierens oder nach dem Polarisieren ansteigt, und daß die periodisch polarisierten Querstreifen (41, 42) der Wellenleiterschicht (4) abwechselnd gleich stark entgegengesetzt zueinander polarisiert sind.

5. Verfahren zur Herstellung eines Lichtwellenleiters nach Anspruch 1, dadurch gekennzeichnet, daß auf dem Substrat nacheinander die metallische Schicht, die Deckschicht und eine Schicht aus einem Wellenleitermaterial zur Herstellung der Wellenleiterschicht aufgetragen werden, daß diese Schicht als ganze durch ein elektrisches Feld polarisiert wird, daß sie durch Wegätzen bis auf erste Querstreifen wieder abgetragen wird, daß ein zweites Mal das Wellenleitermaterial aufgetragen wird, so daß zweite Querstreifen entstehen, und daß die ersten und die zweiten Querstreifen die Wellenleiterschicht bilden.

6. Verfahren zur Herstellung eines Lichtwellenleiters nach Anspruch 5, dadurch gekennzeichnet, daß als Wellenleitermaterial ein Polymer mit einer während des Polarisierens oder nach dem Polarisieren ansteigenden Erweichungstemperatur verwandt wird, daß das beim zweiten Mal aufgetragene Wellenleitermaterial entgegengesetzt zu dem bei dem ersten Mal aufgetragenen Wellenleitermaterial polarisiert wird, so daß zweite polarisierte Querstreifen entstehen.

7. Verfahren zur Herstellung eines Lichtwellenleiters nach Anspruch 1, dadurch gekennzeichnet, daß auf dem Substrat nacheinander die metallische Schicht, die Deckschicht und eine Schicht aus einem bleichbaren Wellenleitermaterial zur Herstellung der Wellenleiterschicht aufgetragen werden, daß diese Schicht als ganze durch ein elektrisches Feld polarisiert, daß erste Querstreifen belichtet werden und durch die Belichtung wieder optisch isotrop werden, so daß sie mit zweiten nicht-belichteten, polarisierten Querstreifen abwechseln, und daß die ersten und die zweiten Querstreifen die Wellenleiterschicht bilden.

8. Verfahren zur Herstellung eines Lichtwellenleiters nach Anspruch 2 und Anspruch 5, dadurch gekennzeichnet, daß die Deckschicht in einem in Lichtausbreitungsrichtung verlaufenden Streifen zur Einbettung der Wellenleiterschicht von ihrer Oberfläche her abgetragen wird und daß der Streifen anschließend mit dem Wellenleitermaterial zur Herstellung der Wellenleiterschicht aufgefüllt wird.

9. Verfahren zur Herstellung eines Lichtwellenleiters nach Anspruch 8, dadurch gekennzeichnet, daß als Wellenleitermaterial ein Polymer mit einer während des Polarisierens oder nach dem Polarisieren ansteigenden Erweichungstemperatur verwandt wird, daß das beim zweiten Mal entgegengesetzt zu dem bei dem ersten Mal aufgetragenen Wellenleitermaterial aufgetragene Wellenleitermaterial polarisiert wird, so daß zweite polarisierte Querstreifen entstehen.

10. Verfahren zur Herstellung eines Lichtwellenleiters nach Anspruch 8, dadurch gekennzeichnet, daß der Streifen mit einem bleichbaren Wellenleitermaterial mindestens bis zur Oberfläche der Polymerschicht aufgefüllt wird, daß die den Streifen ausfüllende Schicht als ganze durch ein elektrisches Feld polarisiert wird, daß erste Querstreifen belichtet werden und durch die Belichtung wieder optisch isotrop werden, so daß sie mit zweiten nicht-belichteten, polarisierten Querstreifen abwechseln.

11. Lichtwellenleiter nach Anspruch 1 oder Anspruch 2, dadurch gekennzeichnet, daß die Wellenleiterschicht (4) aus einem optisch oder durch Bestrahlung mit schnellen Elektronen vernetzbaren Polymer besteht und daß die periodisch polarisierten Querstreifen (41, 42) der Wellenleiterschicht (4) abwechselnd gleich stark entgegengesetzt zueinander polarisiert sind.

12. Verfahren zur Herstellung eines Lichtwellenleiters nach Anspruch 11, dadurch gekennzeichnet, daß auf dem Substrat nacheinander die metallische Schicht, die Deckschicht und eine Schicht aus einem Wellenleitermaterial aufgetragen werden, daß diese Schicht als ganze durch ein erstes elektrisches Feld polarisiert wird, daß diese Schicht, während sie durch eine streifenförmige Maske, deren Streifenbreite der Breite der zu erzeugenden Querstreifen entspricht, teilweise bedeckt ist, belichtet oder mit schnellen Elektronen bestrahlt wird, so daß erste vernetzte Querstreifen entstehen, daß die durch die Maske bedeckten Querstreifen durch ein zweites elektrisches Feld polarisiert werden, das genauso stark wie das erste elektrische Feld, jedoch entgegengesetzt gerichtet ist, und daß anschließend diese Schicht als ganze belichtet oder mit schnellen Elektronen betrahlt wird, so daß zweite vernetzte Querstreifen entstehen, die zu den ersten Querstreifen entgegengesetzt polarisiert sind.

EP 0 481 510 A2

FIG.1

FIG.2